# FASCICULE DE BREVET EUROPEEN

(11) **EP 2 697 614 B1**
(45) Date de publication et mention de la délivrance du brevet: **20.07.2022**
(21) Numéro de dépôt: 12715377.3
(22) Date de dépôt: 13.04.2012
(51) Int. Cl.: G01J 1/42, G01J 1/04

(54) **ANALYSEUR SPATIAL DE FAISCEAU LASER A REGLAGE AUTOMATIQUE**
AUTOMATISCH ANPASSBARER RÄUMLICHER ANALYSATOR FÜR EINEN LASERSTRAHL
AUTOMATICALLY ADJUSTABLE SPATIAL ANALYZER FOR A LASER BEAM

(30) Priorité: 14.04.2011 FR 1153265
(43) Date de publication de la demande: 19.02.2014
(73) Titulaire: Centre National de la Recherche Scientifique, 75016 Paris (FR); Laser Metrologie, 74960 Cran-Gevrier (FR)
(72) Inventeur: BERTHE, Laurent, F-92340 Bourg la Reine (FR); SCHNEIDER, Matthieu, F-75005 Paris (FR); SOSCIA, Marco, F-74933 Poisy (FR)
(74) Mandataire: Marks & Clerk France
(86) Numéro de dépôt international: PCT/EP2012/056790
(87) Numéro de publication internationale: WO 2012/140203

(56) Documents cités:
- EP-A1- 2 037 238
- FR-A1- 2 778 983
- "PARAMETER FEST IM GRIFF", ELEKTROTECHNIK, 331951 1, vol. 73, no. 9, 20 septembre 1991 (1991-09-20), pages 22-24, XP000264643, ISSN: 1431-9578
- NORMAND D ET AL: "FOCUSED LASER INTENSITY MEASUREMENT AT 1018 W/CM2 AND 1053 NM", OPTICS LETTERS, OPTICAL SOCIETY OF AMERICA, US, vol. 15, no. 23, 1 December 1990 (1990-12-01), pages 1400-1402, XP000165354, ISSN: 0146-9592
- KONIG W ET AL: "MOGLICHKEITEN DER PROZESSUEBERWACHUNG BEIM LASERSTRAHLHARTEN DURCH LASERSTRAHLDIAGNOSTIK", LASER UND OPTOELEKTRONIK, FACHVERLAG GMBH. STUTTGART, DE, vol. 23, no. 2, 1 April 1991 (1991-04-01), pages 67-72, XP000147201, ISSN: 0722-9003

## Description

Le domaine de l'invention est celui des analyseurs de faisceaux laser utilisés pour l'analyse de la distribution spatiale de l'intensité Iz(x,y) ou de l'énergie Ez(x, y) d'un faisceau laser focalisé pulsé. Avec ces systèmes, on forme et on analyse l'image d'un faisceau laser dans un plan (x, y) perpendiculaire à l'axe de son trajet optique après la focalisation.

Ces analyseurs sont utilisés dans tous les secteurs d'activités : industriel, médical, agroalimentaire, etc..., et concernent toutes les sources laser focalisées déjà développées et en cours de développement, qui nécessitent une caractérisation complète, et toutes les applications de traitement par laser focalisé, parmi lesquelles on peut citer :
- le perçage (percussion, trépanation),
- le soudage,
- la découpe,
- le rechargement,
- le frittage,
- le choc laser (mise sous contraintes des surfaces, endommagement des matériaux, test d'adhérence, etc..),
- le traitement de surface (décapage, refusions, etc...),
- la gravure en surface et dans la matière,
- etc.

L'analyse de faisceaux laser impulsionnel est déterminante pour connaître les conditions d'irradiation laser dans le plan focal et de part et d'autre du plan focal. Ces paramètres sont généralement désignés comme suit:
- le diamètre du faisceau assimilé à un spot de forme circulaire, elliptique, carrée, rectangulaire, etc...
- la distribution d'intensité sur la zone irradiée par le laser,
- la divergence du faisceau focalisé (caustique de focalisation)
- la fréquence : nombre d'impulsions laser par seconde,
- la durée des impulsions,
- la forme temporelle des impulsions,
- l'énergie par impulsion,
- la puissance crête dans l'impulsion,
- la puissance moyenne du laser,
- les fluctuations d'impulsion à impulsion ou dans une rafale d'impulsions.

Il n'existe pas à ce jour d'analyseur capable d'extraire l'ensemble de ces paramètres dans le plan focal et de part et d'autre du plan focal. De plus, les instruments existants sont confrontés à des difficultés de tenue au flux (50kW de puissance crête), de saturation des signaux liés à des densités de puissance incidentes trop importantes pour les capteurs CCD ou CMOS utilisés. En effet, les niveaux de saturation de ces capteurs sont de l'ordre de 0.5 µJ/cm² à une longueur d'onde de 1.064 µm ce qui nécessite d'utiliser des dispositifs de prélèvement d'une partie du faisceau pour son analyse, mais également des atténuateurs supplémentaires en fonction des densités de puissance incidentes. En plus d'être encombrants, les atténuateurs utilisés dégradent la qualité optique du faisceau rendant leur utilisation très discutable.

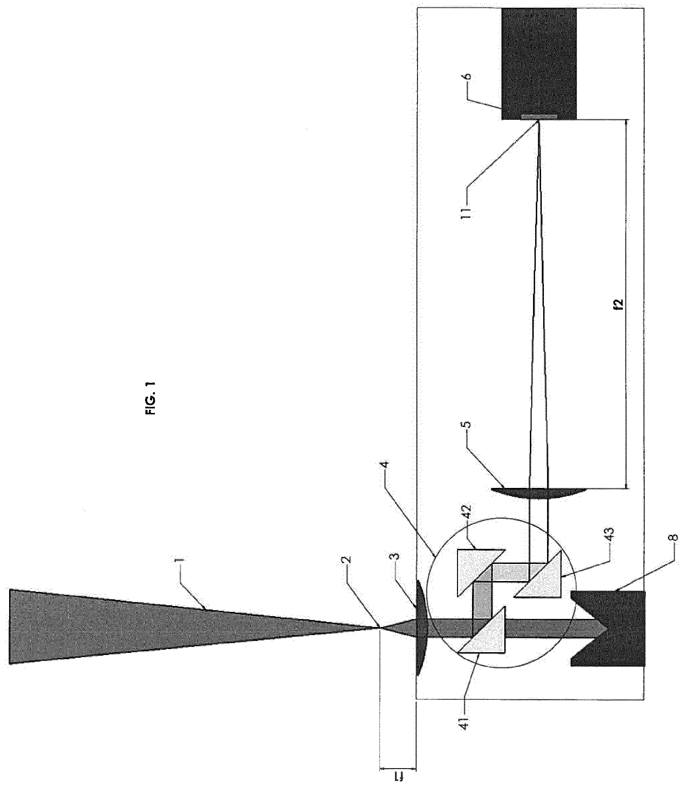

La figure 1 présente une conception classique d'analyseur pour faisceau laser focalisé (voir par exemple le document FR2778983 A1). Il comprend :
- une lentille convergente 3 dite lentille de mise en forme, de focale f1, dont le foyer objet doit être placé dans le plan de focalisation 2 du faisceau à analyser 1,
- un dispositif de prélèvement et/ou d'atténuation 4 représenté ici par 3 prismes 41, 42, 43,
- un dispositif d'absorption de l'énergie en l'occurrence un puits thermique 8 (aussi désigné Joule-mètre thermique) destiné à absorber le faisceau non prélevé, soit jusqu'à plus de 99,995 % du faisceau à analyser 1,
- une lentille convergente 5 dite lentille d'imagerie de focale f2, qui forme l'image 11 du faisceau au plan focal 2, sur le capteur d'analyse 6 et qui définit le grossissement (f2/f1) utilisé pour la mesure du diamètre au plan focal : Øfocal = Øcapteur x(f1/f2). Un télescope peut également être associé à cette lentille d'imagerie pour augmenter le grossissement dans le cas d'un faisceau laser à analyser de faible diamètre (quelques 10µm) ;
- une caméra pour l'analyse d'images et donc de la distribution spatiale de l'énergie Ez(x,y) : elle est typiquement équipée d'un capteur CCD (donc sans fenêtre pour s'affranchir des problèmes d'interférences) ou CMOS 6 placé dans le plan focal de la lentille d'imagerie 5.

L'opération préliminaire à l'analyse du faisceau, consiste à placer correctement les lentilles de mise en forme 3 et d'imagerie 5 afin de garantir la mesure du diamètre de l'image 11 du faisceau obtenue sur le capteur 6. Le réglage manuel de ces lentilles est fastidieux et dangereux pour les éléments de l'appareil. En effet, il est possible de produire des focalisations accidentelles sur les éléments internes du système, qui peuvent les endommager ou les détruire malgré les atténuations prévues.

En outre, avec un laser impulsionnel il faut synchroniser la prise d'images avec les impulsions laser incidentes. Cette synchronisation peut être réalisée si le laser dispose d'une sortie dite "TRIGGER". Cependant, cette opération peut être lourde à mettre en œuvre, voire impossible dans certains cas.

L'ensemble de ces contraintes rendent les analyseurs de faisceaux actuels, encombrants, difficiles à utiliser et fragiles vis-à-vis des densités de puissance, voire incapables d'analyser un faisceau laser de forte puissance (de 1 à 50kW crête pour un laser à impulsions) sur l'ensemble des caractéristiques précitées.

Le but de l'invention est de remédier à ces inconvénients.

Plus précisément l'invention a pour objet un analyseur de la distribution spatiale d'intensité d'un faisceau laser pulsé focalisé dans un plan de focalisation tel que défini dans la revendication 1.

L'invention concerne également un procédé d'analyse de la distribution spatiale d'intensité d'un faisceau laser pulsé focalisé dans un plan perpendiculaire à l'axe du trajet optique du faisceau, au moyen d'un analyseur tel que décrit, qui comprend les étapes suivantes :
- mesure au moyen de la photodiode et de l'interface logicielle, de la période séparant deux impulsions et de la durée moyenne de ces impulsions,
- déclenchement de la prise d'image avec le capteur par l'électronique de synchronisation en fonction de cette période et de cette durée, et
- mesure de la distribution spatiale d'intensité de l'(ou des) image(s) captée(s).

La prise d'image peut être déclenchée à un moment choisi pendant la durée de l'impulsion.

Selon une caractéristique de l'invention, le procédé d'analyse comprend une étape de calibrage de la photodiode en mesure d'énergie absolue par rapport au puits thermique.

D'autres caractéristiques et avantages de l'invention apparaîtront à la lecture de la description détaillée qui suit, faite à titre d'exemple non limitatif et en référence aux dessins annexés dans lesquels :
la figure 1 déjà décrite représente schématiquement un exemple d'analyseur de faisceau selon l'état de la technique,
la figure 2 représente schématiquement un exemple d'analyseur de faisceau selon l'invention.

D'une figure à l'autre, les mêmes éléments sont repérés par les mêmes références.

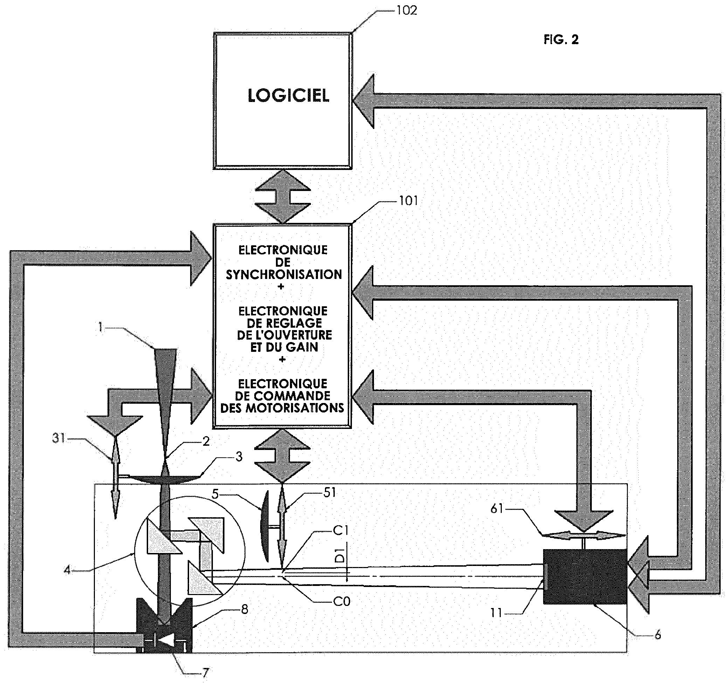

On décrit en relation avec la figure 2 un analyseur de faisceau selon l'invention et son procédé de réglage.

Selon l'invention les positions des lentilles de mise en forme 3 et d'imagerie 5, ainsi que celles du capteur 6 sont motorisées et commandées automatiquement pour obtenir sur le capteur la meilleure image 11 du faisceau à analyser dans le plan focal 2.

Plus précisément, la lentille de mise en forme 3 est associée à une motorisation 31 apte à la translater suivant l'axe du trajet optique, et qui est pilotée par une première électronique de commande, elle-même pilotée par une interface logicielle 102. La lentille d'imagerie 5 est associée à une motorisation 51 apte à la translater suivant un plan perpendiculaire à l'axe du trajet optique ; elle est également pilotée par une deuxième électronique de commande, elle-même pilotée par l'interface logicielle 102. Enfin, le capteur 6 est associé à une motorisation 61 apte à le translater suivant l'axe du trajet optique ; il est également piloté par une troisième électronique de commande, elle-même pilotée par l'interface logicielle 102. Ces trois électroniques de commande sont de préférence regroupées au sein de l'électronique 101. Sur chacun de ces trois axes motorisés une butée électromécanique ou électronique peut être prévue, qui permet de définir une origine et un sens initial pour chacune des translations en renvoyant un signal correspondant aux électroniques de commande.

Le réglage des positions de ces trois éléments 3, 5 et 6 est obtenu de la manière suivante.

Dans un premier temps, on cherche à positionner la lentille de mise en forme 3 de manière à ce que le plan 2 du faisceau à analyser coïncide avec le plan focal objet de cette lentille 3, c'est-à-dire qu'il soit situé à une distance f1 de la lentille 3.

A cet effet, la position de la lentille de mise en forme 3 est pilotée de manière à être placée grossièrement à une distance d1 du plan focal objet à analyser, inférieure à sa focale f1, de façon à être certain d'obtenir un faisceau divergent non dommageable pour les constituants internes de l'analyseur.

La position de la lentille d'imagerie 5 est pilotée de manière à ce que cette lentille soit escamotée du trajet otique suivant un plan perpendiculaire. L'image du faisceau divergent est ainsi obtenue sur le capteur 6 CCD ou CMOS. Cette lentille 5 peut être escamotée avant l'étape précédente.

Pour une position donnée de la lentille de mise en forme 3, le capteur 6 est également piloté pour être déplacé selon le trajet optique, sur une distance de quelques cm pour vérifier que l'on se rapproche bien d'un faisceau collimaté jusqu'à obtenir celui-ci.

Plus précisément, pour une position d1 de la lentille 3 avec d1<f1 :
∘ A) le capteur 6 étant positionné sur une position P11, au moyen de sa motorisation 61, une caractéristique de l'image du faisceau telle que le diamètre Φ11 (ou la distribution d'intensité ou d'énergie E11 (x,y), ou ...), est mesurée par l'interface logicielle 102 qui comporte une unité de traitement des images acquises par le capteur 6,
∘ B) puis le capteur 6 étant positionné sur une position P12, la caractéristique de l'image du faisceau telle que le diamètre Φ12 (ou la distribution d'intensité ou d'énergie E12(x,y), ou ...) est mesurée,
∘ C) |Φ11 - Φ12| est calculé et comparé à un seuil prédéterminé, ou les distributions d'intensité ou d'énergie ou autre, sont comparées à un seuil prédéterminé,
∘ D) tant que ce seuil n'est pas atteint, les étapes A) à C) sont réitérées pour une nouvelle position d2 de la lentille 3 (avec d2<d1) atteinte au moyen de sa motorisation 31, à laquelle sont associés de nouvelles positions P21 et P22 du capteur et de nouvelles caractéristiques tels que de nouveaux diamètres Φ21, et Φ22 ou de nouvelles distributions d'intensité ou d'énergie.
∘ E) Le faisceau est considéré comme étant collimaté et donc la lentille de mise en forme 3 comme étant correctement positionnée (pour que le plan à observer soit situé au foyer objet de la lentille 3), dès que ce seuil est atteint. Ce seuil est typiquement égal à 0 ou proche de 0.

L'opération de collimation étant réalisée, on pilote le repositionnement de la lentille d'imagerie 5 dans le plan perpendiculaire à l'axe du trajet optique. Pour qu'elle soit parfaitement centrée sur l'axe du trajet optique du faisceau collimaté, en C0 on procède de la manière suivante. On superpose à l'image obtenue sur le capteur 6, l'image précédente du faisceau collimaté mise en mémoire par l'unité de traitement des images acquises, en utilisant par exemple un algorithme de comparaison des positions des images : les positions coïncident lorsque la lentille 5 est centrée. Plus précisément :
- A) on détermine la position (x,y) de l'image du faisceau collimaté, obtenue sur le capteur 6, à l'issue de la procédure de collimation, au moyen de l'unité de traitement des images,
- B) on positionne la lentille 5 sur le trajet optique, au moyen de sa motorisation 51, sur une position C1 située à une distance D1 par rapport au centre C0 du trajet optique,
- C) on détermine la position (x,y) de l'image du faisceau convergent, obtenue sur le capteur 6,
- D) on compare les deux positions à un seuil prédéterminé,
- E) tant que ce seuil n'est pas atteint, les étapes B) à D) sont réitérées pour une nouvelle position C2 de la lentille 5, située à une distance D2 plus proche du centre C0, (D2<D1), à laquelle est associée une nouvelle position de l'image.
- F) La lentille 5 est considérée comme étant correctement centrée, dès que ce seuil est atteint. Ce seuil est typiquement égal à 0 ou proche de 0.

La comparaison des positions est par exemple déterminée à partir de la comparaison des barycentres d'intensité des pixels des images, ou à partir de la comparaison des distributions d'intensité ou d'énergie des images E11 (x,y) et E12(x,y), etc....

L'opération de centrage de la lentille 5 étant réalisée, on pilote le capteur 6 pour qu'il soit positionné suivant le trajet optique au plus près (à la résolution numérique près) dans le plan focal image de la lentille d'imagerie 5 en recherchant le diamètre minimum (ou une autre caractéristique optimale) des images obtenues sur le capteur en fonction des positions de celui-ci. Plus précisément :
∘ A) le capteur 6 étant positionné sur une position P1, au moyen de sa motorisation 61, le diamètre Φ1 de l'image du faisceau est mesuré, au moyen de l'unité de traitement des images,
∘ B) puis le capteur 6 étant positionné sur une position P2, le diamètre Φ2 de l'image du faisceau est mesuré,
∘ C) |Φ1 - Φ2| est calculé et comparé à un seuil prédéterminé,
∘ D) tant que ce seuil n'est pas atteint, les étapes B) à C) sont réitérées pour une nouvelle position P2 du capteur, à laquelle est associé un nouveau diamètre Φ2,
∘ E) dès que ce seuil est atteint, typiquement égal à 0 ou proche de 0, on place le capteur 6 à la position médiane entre P1 et P2 qui définit la position du foyer image de la lentille 5.

Comme indiqué précédemment, outre la comparaison des diamètres Φ1, Φ2 d'autres méthodes de comparaison de caractéristiques peuvent être utilisées pour ce réglage : par exemple la comparaison directe des distributions d'intensité ou d'énergie des images obtenues sur le capteur, etc.

Pour la synchronisation automatique de la prise d'images par le capteur d'image 6, le capteur est relié à une électronique de synchronisation des prises d'image avec l'émission laser et également à une électronique de réglage de son ouverture et/ou de son gain. Le signal de synchronisation utilisé par l'électronique est généré par une photodiode 7 judicieusement placée (par exemple au niveau du Joule-mètre thermique 8) qui détecte l'émission laser ; cette électronique est également pilotée par l'interface logicielle. La photodiode qui est donc une photodiode rapide, est calibrée en mesure absolue d'énergie par rapport au puits thermique 8.

Plus précisément, on utilise pour cela une électronique de réglage de l'ouverture et/ou du gain du capteur 6 en fonction de la puissance crête du laser à impulsions. Les électroniques de commande de motorisation, de synchronisation et de réglage de gain et d'ouverture sont ici regroupées au sein de l'électronique 101, reliée à l'interface logicielle 102.

On mesure au moyen de la photodiode 7 et de l'interface logicielle 102, la période séparant 2 impulsions laser ainsi que la largeur (durée) moyenne de ces impulsions. La prise d'image par le capteur 6 pour l'analyse spatiale de la distribution d'intensité, commandée par l'électronique de synchronisation 101 est alors réalisée à partir de 2 impulsions : la détection par la photodiode 7 d'une première impulsion et la connaissance de la période séparant cette impulsion de l'impulsion suivante, permettent de déclencher une prise d'image synchronisée avec la 2ième impulsion. On peut alors au moyen de l'interface logicielle 102 piloter via l'électronique de réglage 101, la durée d'ouverture du capteur 6 en fonction de la largeur des impulsions, et de préférence, également en fonction de la puissance crête du faisceau (avec un prélèvement très faible du faisceau de l'ordre de 10⁻⁸ à 10⁻⁹) détectée par le capteur 6 afin d'obtenir un niveau de signal non saturé. Un signal saturé serait en effet inexploitable.

Dans le cas d'un capteur 6 CCD, lorsque cette synchronisation automatique est réalisée, on règle éventuellement automatiquement le gain du capteur CCD, impulsion par impulsion, jusqu'à obtenir un niveau de signal non saturé, mais proche du format maximum admissible. L'interface logicielle 102 est programmée pour piloter automatiquement le gain programmé avec le niveau de signal sur le capteur CCD.

Cette synchronisation autonome peut être utilisée pour analyser le faisceau en capturant une image à un moment choisi pendant la durée d'une impulsion et à une cadence compatible avec la fréquence de ces impulsions de façon à stocker les images de toutes les impulsions d'une rafale jusqu'à quelques dizaines de Hertz (soit quelques dizaines d'images par secondes) : elle permet également une analyse temporelle des impulsions et des rafales d'impulsions.

Selon un mode de réalisation de l'invention, le puits thermique 8 (aussi désigné Joule-mètre thermique) qui peut absorber plus de 99,995 % de l'énergie ou de la puissance moyenne du faisceau, est utilisé pour réaliser des mesures absolues d'énergie et de puissance laser pendant un temps d'exposition laser prolongé, de l'ordre par exemple d'1mn ; pendant ces mesures un obturateur est avantageusement placé judicieusement sur l'axe motorisé de la lentille d'imagerie 5 pour protéger le capteur 6 de cette exposition laser prolongée. En effet quand bien même le capteur d'image ne serait pas ouvert, cette exposition (1 mn) plus longue que l'exposition moyenne habituelle (<1s) pourrait l'endommager. Ce Joule-mètre thermique calibre en mesure d'énergie absolue, la photodiode de synchronisation 7 qui peut réaliser ainsi, des mesures absolues de distribution spatiale d'énergie compatibles avec la fréquence des impulsions.

On obtient ainsi à l'endroit de la pièce à transformer (et non sur un prélèvement du faisceau) une analyse complète et absolue des caractéristiques du faisceau focalisé réellement utilisé : distribution spatiale d'intensité, diamètre au plan focal ou suivant sa propagation autour du plan focal (soit la caustique de focalisation), le profil temporel, la fréquence et la durée des impulsions, l'énergie et la puissance crête des impulsions, ainsi que la puissance moyenne.

La connaissance de l'évolution dans le temps de la distribution spatiale de l'intensité dans une section du faisceau ou au point de focalisation est particulièrement utile dans les applications industrielles comme le perçage aéronautique par exemple.

## Revendications

1. Analyseur de la distribution spatiale d'intensité d'un faisceau laser (1) impulsionnel focalisé dans un plan de focalisation (2), qui comprend en aval de ce plan (2) et sur le trajet optique :
- une lentille de mise en forme (3),
- un dispositif de prélèvement (4) partiel du faisceau mis en forme,
- un puits thermique (8) adapté à absorber le faisceau non prélevé et à en fournir une mesure absolue d'énergie et de puissance laser
- un capteur d'images (6),
- une lentille d'imagerie (5) apte à former les images du plan (2) sur un capteur d'images (6),
- une photodiode (7) distincte du puits thermique (8), placée sur le trajet du faisceau non prélevé, au niveau du puits thermique (8), configurée pour réaliser avec une électronique de synchronisation (101) une synchronisation autonome qui est configurée de façon à permettre d'effectuer une analyse temporelle des impulsions et de déclencher une capture d'image par le capteur d'image à un moment choisi pendant la durée d'une impulsion, ladite photodiode étant en outre calibrée par rapport aux mesures fournies par le puits thermique de manière à réaliser une mesure absolue d'énergie,
- une motorisation (31) de la lentille de mise en forme (3) apte à translater cette lentille suivant l'axe du trajet optique,
- une motorisation (51) de la lentille d'imagerie (5) apte à translater cette lentille dans un plan perpendiculaire à l'axe du trajet optique,
- une motorisation (61) du capteur d'images (6) apte à translater ce capteur suivant l'axe du trajet optique,
- une électronique de commande (101) de chaque motorisation, et
- l'électronique de synchronisation (101) du capteur d'image, reliée à la photodiode (7), adaptée à fournir ladite synchronisation autonome,
- une électronique de réglage (101) de l'ouverture et/ou du gain du capteur d'image (6), et
- une interface logicielle (102) de paramétrage et de pilotage de ces électroniques de commande, de synchronisation et de réglage, équipée d'une unité de traitement des images acquises par le capteur (6).

2. Procédé d'analyse de la distribution spatiale d'intensité d'un faisceau laser au moyen d'un analyseur selon la revendication précédente, **caractérisé en ce qu'**il comprend les étapes suivantes :
- mesure au moyen de la photodiode (7) et de l'interface logicielle (102), de la période séparant deux impulsions et de la durée moyenne de ces impulsions,
- déclenchement de la prise d'image avec le capteur (6) par l'électronique de synchronisation (101) en fonction de cette période et de cette durée, et
- mesure de la distribution spatiale d'intensité de l'(ou des) image(s) captée(s).

3. Procédé d'analyse selon la revendication précédente, **caractérisé en ce que** la prise d'image est déclenchée à un moment choisi pendant la durée de l'impulsion.

## Patentansprüche

1. Analysator der räumlichen Verteilung der Intensität eines fokussierten Impuls-Laserstrahls (1) in einer Fokussierungsebene (2), welcher im nachgelagerten Bereich dieser Ebene (2) und auf dem Strahlengang Folgendes umfasst:
- eine Formungslinse (3),
- eine Vorrichtung zur teilweisen Entnahme (4) des geformten Strahls,
- eine Wärmesenke (8), welche geeignet ist, um den nicht entnommenen Strahl zu absorbieren und hiervon eine Absolutmessung der Laserenergie und -leistung zu erbringen,
- einen Bildsensor (6),
- eine Bildgebungslinse (5), welche in der Lage ist, die Bilder der Ebene (2) auf einem Bildsensor (6) zu formen,
- eine von der Wärmesenke (8) separate Photodiode (7), welche auf dem Gang des nicht entnommenen Strahls auf Höhe der Wärmesenke (8) platziert ist, welche dazu konfiguriert ist, um mit einer Synchronisierungselektronik (101) eine autonome Synchronisierung durchzuführen, die dergestalt konfiguriert ist, dass sie die Durchführung einer zeitlichen Analyse der Impulse und die Auslösung einer Bildaufnahme durch den Bildsensor zu einem gewählten Zeitpunkt während der Dauer eines Impulses ermöglicht, wobei die Photodiode ferner anhand von Messungen kalibriert ist, welche durch die Wärmesenke bereitgestellt werden, um eine Absolut-Energiemessung durchzuführen,
- eine Motorisierung (31) der Formungslinse (3), welche in der Lage ist, diese Linse entlang der Achse des Strahlengangs zu verschieben,
- eine Motorisierung (51) der Bildgebungslinse (5), welche in der Lage ist, diese Linse in einer Ebene zu verschieben, welche rechtwinklig zum Strahlengang ist,
- eine Motorisierung (61) des Bildsensors (6), welche in der Lage ist, diesen Sensor entlang der Achse des Strahlengangs zu verschieben,
- eine Steuerelektronik (101) für jede Motorisierung, und
- die Synchronisierungselektronik (101) des Bildsensors, welche mit der Photodiode (7) verbunden ist, die geeignet ist, die autonome Synchronisierung bereitzustellen,
- eine Einstellelektronik (101) der Öffnung und/oder der Verstärkung des Bildsensors (6), und
- eine Software-Schnittstelle (102) zum Parametrisieren und Steuern dieser Steuer-, Synchronisierungs- und Einstellungselektronik, welche mit einer Verarbeitungseinheit der durch den Sensor (6) erfassten Bilder ausgerüstet ist.

2. Verfahren zur Analyse der räumlichen Verteilung der Intensität eines Laserstrahls mithilfe eines Analysators nach dem vorhergehenden Anspruch, **dadurch gekennzeichnet, dass** es folgende Schritte umfasst:
- Messen, mithilfe der Photodiode (7) und der Software-Schnittstelle (102), der Periode, welche zwei Impulse trennt, und der mittleren Dauer dieser Impulse,
- Auslösen der Bildaufnahme mit dem Sensor (6) durch die Synchronisierungselektronik (101) angesichts dieser Periode und dieser Dauer, und
- Messen der räumlichen Verteilung der Intensität des erfassten Bildes oder der erfassten Bilder.

3. Verfahren zur Analyse nach dem vorhergehenden Anspruch, **dadurch gekennzeichnet, dass** die Bildaufnahme zu einem während der Impulsdauer gewählten Zeitpunkt ausgelöst wird.

## Claims

1. An analyser for analysing the spatial intensity distribution of a focused pulsed laser beam (1) in a focal plane (2), which comprises, downstream of this plane (2) and on the optical path:
- a shaping lens (3),
- a device (4) for partially sampling the shaped beam,
- a heat sink (8) adapted to absorb the unsampled beam and to provide an absolute measurement of the laser energy and power thereof,
- an image sensor (6),
- an imaging lens (5) able to form images of the plane (2) on an image sensor (6),
- a photodiode (7), separate from the heat sink (8), placed on the path of the unsampled beam at the heat sink (8) and configured to perform, using synchronisation electronics (101), an autonomous synchronisation configured so as to allow a temporal analysis of pulses to be carried out and an image capture, by the image sensor, to be triggered at a chosen time during the duration of a pulse, said photodiode being further calibrated against the measurements provided by the heat sink in order to perform an absolute measurement of the energy,
- a motorisation (31) of the shaping lens (3) able to translate this lens along the axis of the optical path,
- a motorisation (51) of the imaging lens (5) able to translate this lens in a plane perpendicular to the axis of the optical path,
- a motorisation (61) of the image sensor (6) able to translate this sensor along the axis of the optical path,
- electronics for controlling (101) each motorisation, and
- the electronics for synchronising (101) the image sensor, which are connected to the photodiode (7), which are adapted to provide said autonomous synchronisation,
- electronics for adjusting (101) the aperture and/or the gain of the image sensor (6), and
- a software interface (102) for parameterising and piloting these controlling, synchronising and adjusting electronics, which is equipped with a unit for processing the images acquired by the sensor (6).

2. A method for analysing the spatial intensity distribution of a laser beam by means of an analyser according to the preceding claim, **characterised in that** it comprises the following steps:
- measuring, by means of the photodiode (7) and the software interface (102), the period separating two pulses and the average duration of these pulses,
- triggering, by the synchronising electronics (101), image capture with the sensor (6) as a function of this period and this duration, and
- measuring the spatial intensity distribution of the one or more captured images.

3. The analysing method according to the preceding claim, **characterised in that** image capture is triggered at a chosen time during the duration of the pulse.
